# EUROPEAN PATENT SPECIFICATION

(11) **EP 2 018 763 B1**
(45) Date of publication and mention of the grant of the patent: **26.12.2018**
(21) Application number: 07804851.9
(22) Date of filing: 14.05.2007
(51) Int. Cl.: H04M 1/725, H04M 1/67

(54) **ELECTRONIC DEVICE HAVING A PLURALITY OF MODES OF OPERATION**
ELEKTRONISCHE VORRICHTUNG MIT EINER VIELZAHL VON BETRIEBSMODI
DISPOSITIF ÉLECTRONIQUE COMPORTANT UNE PLURALITÉ DE MODES DE FONCTIONNEMENT

(30) Priority: 15.05.2006 US 434631
(43) Date of publication of application: 28.01.2009
(73) Proprietor: Nokia Technologies Oy, 02610 Espoo (FI)
(72) Inventor: MÄKELÄ, Jakke, 20540 Turku (FI); LINJAMA, Jukka, 02200 Espoo (FI)
(74) Representative: Higgin, Paul
(86) International application number: PCT/IB2007/002484
(87) International publication number: WO 2008/004123

(56) References cited:
- GB-A- 2 314 739
- US-A1- 2004 085 351
- US-A1- 2005 116 840
- US-A1- 2005 212 749
- US-B2- 6 985 137

## Description

### FIELD OF THE INVENTION

Embodiments of the present invention relate to an electronic device having a plurality of modes of operation, a computer program and a method for switching the device between the plurality of modes of operation. In particular they relate to electronic devices having more than one user input.

### BACKGROUND TO THE INVENTION

Electronic devices commonly have an active mode of operation, where a user can use a user input to access the functions of the electronic device and a restricted mode of operation where the user input is non-responsive to user actuation thereby preventing user access to functions of the device. For example, in a cellular radio telephone, it is common for a user to be able to lock the keypad when the phone is not in use so that when the phone is being carried in a pocket or a handbag it cannot perform functions, such as dialing a number, unintentionally but the phone can still receive incoming calls and messages.

Sometimes a user of such devices may wish to briefly access the functions of the device, for example, they may wish to quickly check a piece of information stored in the device. In such circumstances it may be inconvenient for the user of the device to have to exit the restricted mode and enter the active mode.

US 2005/0116840 discloses a mobile phone which has three operational states. The states include a locked state, an unlocked state and an intermediate state. The intermediate state is accessed from the locked state by making a specific input via the keypad. In the intermediate state, some basic functions of the mobile phone are accessible via the keypad.

US 2005/0212749 discloses a handheld device which is responsive to the motion of the device to provide user inputs. The device may comprise sensors such as gyroscopes which detect the motion of the device. The processor is configured to convert the detected movement of the device into a control function.

US 2004/085351 discloses an electronic device comprising a touch screen configured to enter a lock state upon the fulfilment of a predetermined condition, wherein the device is configured to detect a touch on a predetermined point in one or more images and to deactivate the device lock state upon detection of a predetermined number of touches on successive images including a predetermined point.

### BRIEF DESCRIPTION OF THE INVENTION

The invention is as set out in independent claims 1, 6 and 9 to 11, preferred forms being set out in dependent claims 2 to 5 and 7 and 8.

This provides the advantage that a user can view information without having to enter an active mode of operation. This allows quick access to information and also prevents any functions being performed unintentionally on the information as the device remains in a restricted mode.

The embodiments and/or examples disclosed in the following description which are not covered by the appended claims are considered as not being part of the present invention.

### BRIEF DESCRIPTION OF THE DRAWINGS

For a better understanding of the present invention reference will now be made by way of example only to the accompanying drawings in which:
Fig. 1. schematically illustrates an electronic device;
Fig. 2. is a mode transition diagram for an electronic device according to an embodiment of the present invention;
Figs. 3A to 3G. illustrate an embodiment of the present invention in use.

### DETAILED DESCRIPTION OF EMBODIMENTS OF THE INVENTION

The Figures illustrate an electronic device 1 comprising: a display 11, a first user input 13, for enabling access to a plurality of functions, a second user input 15, and a controller 3, operable, in response to an input, to change the mode of operation of the device 1 from a first, active mode of operation, in which the controller 3 is operable to enable a user access to a plurality of functions, to a second, restricted mode of operation in which the controller 3 is operable to disable user access to the plurality of functions, and operable, in response to an input via the second user input 15, to change the mode of operation of the device 1 from the second, restricted mode of operation to a third, restricted mode of operation in which the controller 3 is operable to disable user access to the plurality of functions and is operable to present information not presentable in the second restricted mode of operation.

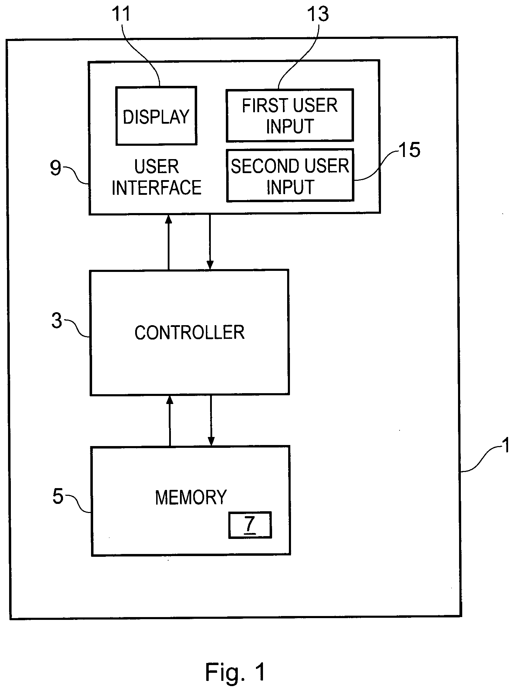

Fig. 1 schematically illustrates an electronic device 1. Only the features referred to in the following description are illustrated. It should, however, be understood that the device 1 may comprise additional features that are not illustrated. The electronic device 1 may be, for example, a personal computer, a personal digital assistant, a mobile cellular telephone, or any other electronic device having a plurality of modes of operation including an active mode and a restricted mode.

The illustrated electronic device 1 comprises: a user interface 9, a memory 5, and controller 3. The user interface 9 comprises a display 11, a first user input 13 and a second user input 15.

The user inputs 13 and 15 may be any means which allow a user to enable access to the functions of the device 1 and input information into the device 1 including, for example, a key pad, a detector for detecting a gesture input, a joystick, a roller, voice recognition means or a touch sensitive region of the display 11. The first user input 13 and the second user input 15 may be different types of input, for example the first user input 13 may be a keypad, while the second user input 15 may be a detector for detecting gesture inputs.

A gesture input may be a tap applied to the device by the user. The detector for detecting the gesture input may be operable to detect a tap applied to any part of the device. The detector may also be operable to distinguish between taps made to various parts of the device.

A gesture input may also be movement of the device, such as shaking or tilting the device, or making a series of motions which imparts a sudden change of momentum to the device.

The detector for detecting the gesture input may be an accelerometer, an inductive pad for detecting the speed of approach of an object such as a user's finger, or a proximity sensor.

The controller 3 is connected to receive input commands from the user inputs 13 and 15 and to provide output commands to the display 11. The controller 3 is also connected to write to and read from the memory 5.

The memory 5 stores computer program instructions 7, which when loaded into the controller 3, enable the controller 3 to control the operation of the device 1 as described below. The computer program instructions 7 provide the logic and routines that enables the electronic device 1 to perform the methods described below.

The computer program instructions 7 may arrive at the electronic device 1 via an electromagnetic carrier signal or be copied from a physical entity such as a computer program product, a memory device or a record medium such as a CD-ROM or DVD.

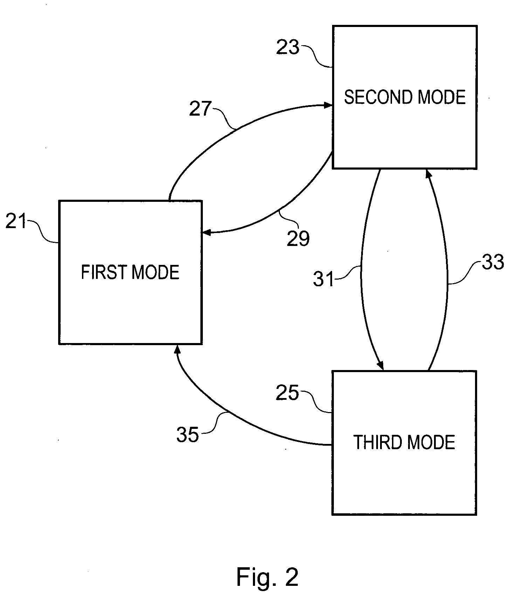

Fig. 2 is a mode transition diagram which schematically illustrates the different modes of operation and the possible transitions between the modes for the electronic device 1 illustrated in Fig. 1.

The first mode 21 is an active mode of operation in which the first user input 13 is operable to enable a user to access a plurality of functions of the electronic device 1. The plurality of functions may include, for example, communications functions which enable the device 1 to communicate in a cellular network, information functions which enable a user to input and store information, camera functions which enable a user to capture and store images.

In some embodiments only the first user input 13 may be operable to enable access to the plurality of functions when the device is in the first mode 21. In other embodiments both the first user input 13 and the second user input 15 may be operable to enable access to the plurality of functions.

The second mode 23 is a restricted mode of operation. In this mode 23 neither of the user inputs 13 and 15 are responsive to enable access to the plurality of functions. However the second user input 15 is operable to detect an input, such as a gesture input, and switch the device 1 from the second mode 23 to the third mode 25.

In some embodiments the user may still have access to a substantially limited range of functions when the device 1 is in the second, restricted mode 23. For example, in embodiments where the device 1 is a cellular radio telephone a user can still access emergency communications functions by dialing an emergency telephone number, such as 911 in the US or 112 in Europe, even when the device 1 is in a restricted mode of operation. Also a user may be able to view a limited amount of information on the display 11 without having to enter an active mode 21. Such information may include an indication of the strength of the cellular network signal, an indication of the power remaining in the battery, an indication that audio alerts have been deactivated and an indication that the device 1 is in a restricted mode.

The third mode 25 is also a restricted mode. As in the second mode 23 the first user input 13 is unresponsive to user actuation except for providing access to a substantially limited range of functions. However, the third mode 25 differs from the second mode 23 in that in the third mode 25 the controller 3 is operable to control the display 11 to display information that cannot be displayed when the device 1 is in the second mode 23.

The information that can be displayed in the third mode 25 may be stored in a menu in the memory 5 of the device 1. The second user input 15 may be operable to enable a user to navigate through the menu and select the information to be displayed.

The information may include information relating to missed telephone calls or received but unread SMS or MMS messages. For example the information could include the time of the missed call or message, and who the missed call or message is from. In some embodiments the controller 3 may be operable to control the display 11 to present the entire contents of the received messages.

When the device 1 is in the third mode 25 the controller 3 is not operable to perform any of the plurality of functions of the device 1 on the information that is displayed on the display 11. That is, the user can view the information but not edit, delete, forward or use the information, for example to make a telephone call. This prevents any functions being performed unintentionally for example dialing a number inadvertently or deleting a piece of information.

The mode of operation of the device 1 can be switched from the first mode 21 to the second mode 23, as indicated by the input 27, and from the second mode 23 to the first mode 21 as indicated by the input 29. The inputs 27 and 29 may be made via the user inputs 13 and 15. For example, if the device 1 is a cellular radio telephone and the first user input 13 is a key pad, inputs 27 and 29 may be actuating the keys in a specific sequence such as a soft key followed by the star key.

The electronic device 1 may be a foldable or slideable device 1 in which case the input 27 may be closing the device, and the input 29 may be opening the device 1.

In some embodiments the inputs 27 and 29 could be external, for example input 27 could be an incoming call and input 29 could be the end of a call.

The mode of operation of the device 1 can be switched from the second mode 23 to the third mode 25, via input 31, but not from the first mode 21 to the third mode 25. Input 31 may be actuation of the second user input 15. In embodiments where the second user input is a detector for detecting a gesture input, the input 31 may be a gesture input such as a tap applied to any part of the device 1.

The mode of operation of the device 1 can be switched from the third mode 25 to the second mode 23, as indicated by input 33, and from the third mode 25 to the first mode as indicated by input 35.

Input 33 may be a user input made via the second user input 15 or it could be the detection, by the controller 3 that no input has occurred for a predetermined amount of time. Input 35 may be actuation of the first user input 13 for example, actuating keys of a keypad in a specific sequence as described above.

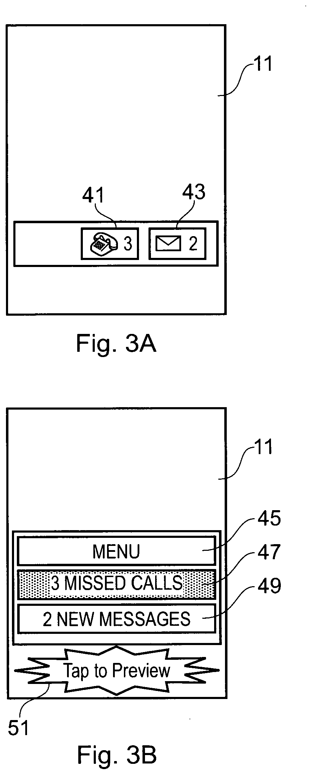

Figs 3A to 3G illustrate an embodiment of the invention in use. In this particular embodiment the electronic device 1 is a cellular radio telephone and the second user input 15 is a detector for detecting a tap input. The detector may comprise an accelerometer which can detect a tap applied to any part of the device 1.

Fig 3A illustrates a display 11 presented to a user when the device 1 is in the second mode 23. Two icons 41 and 43 are displayed on the display 11. Icon 41 represents the number of missed calls the device 1 has received and icon 43 represents the number of received but unread messages the device 1 has received.

If a user wishes to view more information about the missed calls and received messages then the user can enter the third mode 25 of the device 1 by tapping the device 1. The tap may be applied to any part of the device 1. In some embodiments the user may have to tap a specific part of the device 1 for example the top of the device 1.

Fig 3B illustrates an example of a display 11 presented to a user when the user enters the third mode 25 of operation of the device 1. The display 11 comprises a menu 45 containing a first option 47 relating to the missed calls and a second option 49 relating the received messages. In Fig 3B the first menu option 47 is highlighted. The user may be able to navigate through the menu 45 using the second user input 15. For example tapping the top of the device 1 will scroll up the list, tapping the bottom of the device 1 will scroll down the list and tapping any other part of the device 1 will select the highlighted option.

Icon 51 indicates that by tapping the device 1 the user will be able to preview the highlighted menu option, that is, they will be able to view information associated with the highlighted menu option but not perform any function on that information. In some embodiments the icon 51 may flash.

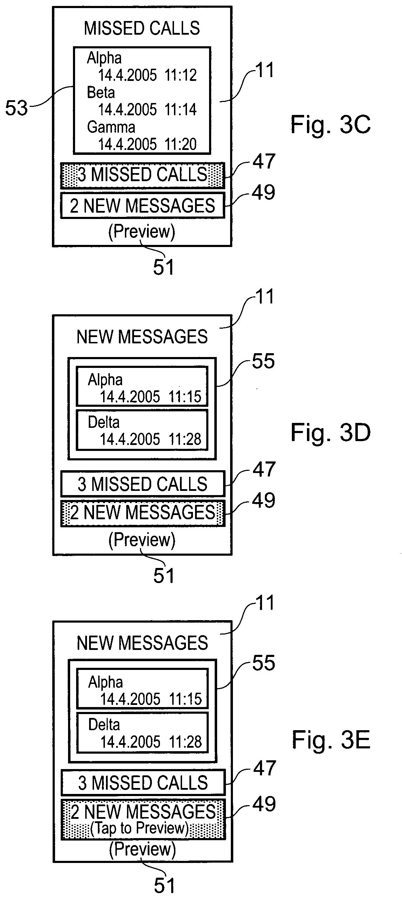

Fig 3C illustrates the display 11 presented to a user after they have selected the menu option 47 relating to missed calls. Information 53 relating to the missed calls is now displayed. The information 53 includes an identification of the caller, and the time and date at which the call was made. In this particular embodiment the menu options 47 and 49 are also displayed, this enables a user to view the information 53 and also continue scrolling through the options without having to return to the display 11 of Fig 3B.

To view details of the new messages the user must scroll down the list of menu options to highlight the menu option 49 associated with new messages and then select the menu option 49 by tapping the device 1. Fig 3D illustrates a display 11 presented to the user after they have selected the menu option 49 associated with new messages according to a first embodiment of the invention. Information 55 relating to the new messages is received. This information 55 includes an identification of the sender of each message and the time and date at which each message was received. As in fig 3C the menu options 47 and 49 are also displayed together with the information 55.

In other embodiments of the invention the device 1 may be operable to present the contents of the new messages on the display 11 while the device still in the third mode 25. In these embodiments the display will present the display illustrated in fig 3E to a user instead of that of Fig 3D when the user selects the menu option 49 relating to new messages.

Fig 3E is the same as Fig 3D except that menu option 49 now indicates that by tapping the device 1 again the user can preview the messages. In some embodiments the tap may have to be made to a specific part of the device 1, for example the right side or the left side.

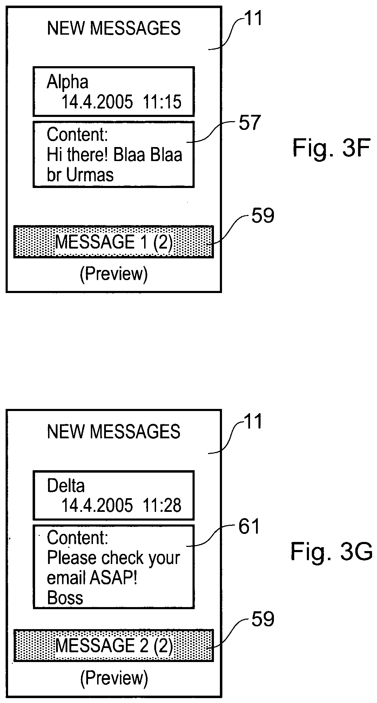

Figs 3F and 3G illustrate the display presented to a user when they have selected to preview the contents of the new messages. In fig 3F the first message 57 is presented to the user. The menu options 47 and 49 have been replaced by an icon 59 indicating that the message 57 currently displayed is the first of two new messages.

Fig 3G illustrates the display presented to the user after they have tapped the device 1 in order to control the device 1 to present the second message 61. Fig 3G is similar to fig 3F except that the first message 57 has been replaced with the second message 61 and the icon 59 now indicates that the message 61 is the second of two messages.

In some embodiments viewing the information does not change the status of the information viewed. For example if a user views the contents of a message when the device 1 is in the third mode 25 then the messages are still classed as new and unread and the icon 43 indicating the number of new and unread messages will not change when the device returns to the second mode 23.

In the described embodiment the user accesses information relating to missed calls and received messages when the device 1 is in the third mode. The user may be also be able to access other information, for example, voice mail, delivery reports or emails, or information that has been stored in the device such as contact lists or a diary.

Although embodiments of the present invention have been described in the preceding paragraphs with reference to various examples, it should be appreciated that modifications to the examples given can be made without departing from the scope of the invention as claimed. For example in the embodiments described the information has been presented to the user by being displayed on a display, in other embodiments the information could be presented in other ways for example as an audio output.

## Claims

1. An electronic device (1) comprising:
a display (11);
first user input means (13), for enabling access to a plurality of functions;
second user input means (15) comprising a detector for detecting gesture inputs; and
a controller (3) operable, in response to an input, to change a mode of operation of the device from a first, active mode of operation, in which the controller (3) is operable to enable user access to the plurality of functions, to a second, restricted mode of operation in which the controller (3) is operable to disable user access to the plurality of functions, and
operable, in response to a gesture input via the second user input means (15) wherein the gesture input is a tap applied to any part of the device (1), to change the mode of operation of the device (1) from the second, restricted mode of operation to a third, restricted mode of operation in which the controller (3) is operable to disable user access to the plurality of functions and is operable to present information not presentable in the second restricted mode of operation wherein when the device (1) is in the third mode of operation the first user input means (13) is unresponsive to user actuation to provide access to the plurality of functions,
wherein viewing information in the third, restricted mode of operation does not change a status of the viewed information, and
when the device (1) is in the third, restricted mode of operation the controller (3) is not operable to edit, delete or forward the displayed information, in response to a user input,
wherein the information presented to the user in the third restricted mode of operation is stored in a menu and the electronic device is configured for user input to navigate through the menu (45) by tapping the top of the device to scroll up, tapping the bottom of the device to scroll down, and tapping any other part of the device to select an option of the menu, and
wherein when the device (1) is in the second, restricted mode of operation (23) the electronic device is configured to enable user access to emergency communications functions and the electronic device is configured to display:
an indication of the power remaining in the battery;
an indication of the strength of the cellular network signal;
an indicator (41) of the number of missed calls the device (1) has received; and
an indicator (43) of the number of received but unread messages the device (1) has received.

2. An electronic device (1) as claimed in claim 1 wherein when the device (1) is in the third, restricted mode of operation the controller (3) is operable, in response to actuation of the second user input means (15), to control the display (11) to present further information not presentable in the second, restricted mode of operation.

3. An electronic device (1) as claimed in any preceding claim wherein when the device (1) is in either of the restricted modes of operation the controller (3) is configured to disable access to all communications functions except emergency communications functions.

4. An electronic device (1) as claimed in any preceding claim wherein the first user input means (13) is a keypad or a touch sensitive region of the display (11).

5. An electronic device (1) as claimed in any preceding claim wherein the electronic device (1) is a mobile cellular telephone or a personal digital assistant.

6. A method of controlling an electronic device (1) comprising a display (11), first user input means (13), for enabling access to a plurality of functions, second user input means (15) comprising a detector for detecting gesture inputs and a controller (3), the method comprising:
detecting a user input when the device (1) is in a first, active mode of operation in which the controller (3) is operable to enable a user access to the plurality of functions;
in response to the detection of the user input changing the mode of operation from the first, active mode of operation to a second, restricted mode of operation in which the controller (3) is operable to disable user access to the plurality of functions;
detecting a gesture user input via the second user input means (15) wherein the gesture input is a tap applied to any part of the device (1) when the device is in the second, restricted mode of operation; and,
in response to the gesture user input changing the mode of operation of the device (1) from the second, restricted mode of operation to a third, restricted mode of operation in which the controller (3) is operable to disable user access to the plurality of functions and is operable to control the display (11) to present information not presentable in the second, restricted mode of operation wherein when the device (1) is in the third mode of operation the first user input means (13) is unresponsive to user actuation to provide access to the plurality of functions,
wherein viewing information in the third, restricted mode of operation does not change a status of the viewed information, and
when the device (1) is in the third, restricted mode of operation the controller (3) is not operable to edit, delete or forward the displayed information, in response to a user input,
wherein the information presented to the user in the third restricted mode of operation is stored in a menu and the electronic device is configured for user input to navigate through the menu (45) by tapping the top of the device to scroll up, tapping the bottom of the device to scroll down, and tapping any other part of the device to select an option of the menu, and
wherein when the device (1) is in the second, restricted mode of operation (23) the electronic device is configured to enable user access to emergency communications functions and the electronic device is configured to display:
an indication of the power remaining in the battery;
an indication of the strength of the cellular network signal;
an indicator (41) of the number of missed calls the device (1) has received; and
an indicator (43) of the number of received but unread messages the device (1) has received.

7. A method as claimed in claim 6 wherein when the device (1) is in the third, restricted mode of operation the controller (3) is operable, in response to actuation of the second user input means (15), to control the display (11) to present further information not presentable in the second, restricted mode of operation.

8. A method as claimed in any of claims 6 to 7 wherein when the device (1) is in the third, restricted mode of operation the controller (3) is not operable to edit, delete or forward the displayed information, in response to a user input.

9. A computer program comprising program instructions for controlling an electronic device, the electronic device (1) having a display (11), first user input means (13) for enabling access to a plurality of functions, second user input means (15) comprising a detector for detecting gesture inputs and a controller (3), which, when loaded into a processor, provides:
means for detecting a user input when the device (1) is in a first, active mode of operation in which the controller (3) is operable to enable a user access to the plurality of functions;
means for changing the mode of operation of the device, in response to the detection of the user input, from the first, active mode of operation to a second, restricted mode of operation in which the controller (3) is operable to disable user access to the plurality of functions;
means for detecting a gesture user input via the second user input means wherein the gesture input is a tap applied to any part of the device (1) when the device is in the second, restricted mode of operation; and
means for changing the mode of operation of the device, in response to the gesture user input, from the second restricted mode of operation to a third, restricted mode of operation in which the controller (3) is operable to disable user access to the plurality of functions and is operable to control the display to present information not presentable in the second, restricted mode of operation wherein when the device (1) is in the third mode of operation the first user input means (13) is unresponsive to user actuation to provide access to the plurality of functions,
wherein viewing information in the third, restricted mode of operation does not change a status of the viewed information, and
when the device (1) is in the third, restricted mode of operation the controller (3) is not operable to edit, delete or forward the displayed information, in response to a user input,
wherein the information presented to the user in the third restricted mode of operation is stored in a menu and the electronic device is configured for user input to navigate through the menu (45) by tapping the top of the device to scroll up, tapping the bottom of the device to scroll down, and tapping any other part of the device to select an option of the menu, and
wherein when the device (1) is in the second, restricted mode of operation (23) the electronic device is configured to enable user access to emergency communications functions and the electronic device is configured to display:
an indication of the power remaining in the battery;
an indication of the strength of the cellular network signal;
an indicator (41) of the number of missed calls the device (1) has received; and
an indicator (43) of the number of received but unread messages the device (1) has received.

10. A physical entity embodying the computer program as claimed in claim 9.

11. An electromagnetic carrier signal carrying the computer program as claimed in claim 9.

## Patentansprüche

1. Elektronische Vorrichtung (1), umfassend:
eine Anzeige (11);
ein erstes Benutzereingabemittel (13) zum Ermöglichen von Zugang zu mehreren Funktionen;
ein zweites Benutzereingabemittel (15) mit einem Detektor zum Detektieren von Gesteneingaben; und
eine Steuerung (3), die als Reaktion auf eine Eingabe betreibbar ist zum Wechseln eines Betriebsmodus der Vorrichtung von einem ersten aktiven Betriebsmodus, in dem die Steuerung (3) betreibbar ist zum Ermöglichen von Benutzerzugang zu den mehreren Funktionen, zu einem zweiten eingeschränkten Betriebsmodus, in dem die Steuerung (3) betreibbar ist zum Sperren von Benutzerzugang zu den mehreren Funktionen und
als Reaktion auf eine Gesteneingabe über das zweite Benutzereingabemittel (15), wobei die Gesteneingabe ein auf einen beliebigen Teil der Vorrichtung (1) angewandtes Antippen ist, betreibbar ist zum Wechseln des Betriebsmodus der Vorrichtung (1) von dem zweiten eingeschränkten Betriebsmodus zu einem dritten eingeschränkten Betriebsmodus, in dem die Steuerung (3) betreibbar ist zum Sperren von Benutzerzugang zu den mehreren Funktionen und betreibbar ist zum Präsentieren von in dem zweiten eingeschränkten Betriebsmodus nicht präsentierbaren Informationen, wobei, wenn sich die Vorrichtung (1) in dem dritten Betriebsmodus befindet, das erste Benutzereingabemittel (13) nicht auf Benutzerbetätigung zum Bereitstellen von Zugang zu den mehreren Funktionen reagiert,
wobei Betrachten von Informationen in dem dritten eingeschränkten Betriebsmodus einen Status der betrachteten Informationen nicht ändert und
wenn sich die Vorrichtung (1) in dem dritten eingeschränkten Betriebsmodus befindet, die Steuerung (3) nicht betreibbar ist zum Editieren, Löschen oder Weiterleiten der angezeigten Informationen als Reaktion auf eine Benutzereingabe,
wobei die dem Benutzer in dem dritten eingeschränkten Betriebsmodus präsentierten Informationen in einem Menü gespeichert werden und die elektronische Vorrichtung ausgelegt ist für Benutzereingabe zum Navigieren durch das Menü (45) durch Antippen des oberen Teils der Vorrichtung zum Hochrollen, Antippen des unteren Teils der Vorrichtung zum Herunterrollen und Antippen eines beliebigen anderen Teils der Vorrichtung zum Auswählen einer Option des Menüs und
wobei, wenn sich die Vorrichtung (1) in dem zweiten eingeschränkten Betriebsmodus (23) befindet, die elektronische Vorrichtung ausgelegt ist zum Ermöglichen von Benutzerzugang zu Notfall-Kommunikationsfunktionen und die elektronische Vorrichtung dafür ausgelegt ist, Folgendes anzuzeigen:
eine Angabe des in der Batterie verbleibenden Stroms;
eine Angabe der Stärke des Mobilfunknetzsignals;
einen Indikator (41) für die Anzahl verpasster Anrufe, die die Vorrichtung (1) empfangen hat; und
einen Indikator (43) für die Anzahl empfangener, aber ungelesener Nachrichten, die die Vorrichtung (1) empfangen hat.

2. Elektronische Vorrichtung (1) nach Anspruch 1, wobei, wenn sich die Vorrichtung (1) in dem dritten eingeschränkten Betriebsmodus befindet, die Steuerung (3) als Reaktion auf Betätigung des zweiten Benutzereingabemittels (15) betreibbar ist zum Steuern der Anzeige (11), um weitere Informationen zu präsentieren, die in dem zweiten eingeschränkten Betriebsmodus nicht präsentierbar sind.

3. Elektronische Vorrichtung (1) nach einem der vorhergehenden Ansprüche, wobei, wenn sich die Vorrichtung (1) in einem der eingeschränkten Betriebsmodi befindet, die Steuerung (3) ausgelegt ist zum Sperren von Zugang zu allen Kommunikationsfunktionen mit Ausnahme von Notfall-Kommunikationsfunktionen.

4. Elektronische Vorrichtung (1) nach einem der vorhergehenden Ansprüche, wobei das erste Benutzereingabemittel (13) ein Tastenfeld oder eine berührungsempfindliche Region der Anzeige (11) ist.

5. Elektronische Vorrichtung (1) nach einem der vorhergehenden Ansprüche, wobei die elektronische Vorrichtung (1) ein Mobilfunk-Telefon oder ein Personal Digital Assistant ist.

6. Verfahren zur Steuerung einer elektronischen Vorrichtung (1), die eine Anzeige (11), ein erstes Benutzereingabemittel (13) zum Ermöglichen von Zugang zu mehreren Funktionen, ein zweites Benutzereingabemittel (15) mit einem Detektor zum Detektieren von Gesteneingaben und eine Steuerung (3) umfasst, wobei das Verfahren Folgendes umfasst:
Detektieren einer Benutzereingabe, wenn sich die Vorrichtung (1) in einem ersten aktiven Betriebsmodus befindet, in dem die Steuerung (3) betreibbar ist zum Ermöglichen eines Benutzerzugangs zu den mehreren Funktionen;
als Reaktion auf die Detektion der Benutzereingabe Wechseln des Betriebsmodus von dem ersten aktiven Betriebsmodus zu einem zweiten eingeschränkten Betriebsmodus, in dem die Steuerung (3) betreibbar ist zum Sperren von Benutzerzugang zu den mehreren Funktionen;
Detektieren einer Gesten-Benutzereingabe über das zweite Benutzereingabemittel (15), wobei die Gesteneingabe ein Antippen ist, das auf einen beliebigen Teil der Vorrichtung (1) angewandt wird, wenn sich die Vorrichtung in dem zweiten eingeschränkten Betriebsmodus befindet; und
als Reaktion auf die Gesten-Benutzereingabe Wechseln des Betriebsmodus der Vorrichtung (1) von einem zweiten eingeschränkten Betriebsmodus zu einem dritten eingeschränkten Betriebsmodus, indem die Steuerung (3) betreibbar ist zum Sperren von Benutzerzugang zu den mehreren Funktionen und betreibbar ist zum Steuern der Anzeige (11), um in dem zweiten eingeschränkten Betriebsmodus nicht präsentierbare Informationen zu präsentieren, wobei, wenn sich die Vorrichtung (1) in dem dritten Betriebsmodus befindet, das erste Benutzereingabemittel (13) nicht auf Benutzerbetätigung zum Bereitstellen von Zugang zu den mehreren Funktionen reagiert,
wobei Betrachten von Informationen in dem dritten eingeschränkten Betriebsmodus einen Status der betrachteten Informationen nicht ändert und
wenn sich die Vorrichtung (1) in dem dritten eingeschränkten Betriebsmodus befindet, die Steuerung (3) nicht betreibbar ist zum Editieren, Löschen oder Weiterleiten der angezeigten Informationen als Reaktion auf eine Benutzereingabe,
wobei die dem Benutzer in dem dritten eingeschränkten Betriebsmodus präsentierten Informationen in einem Menü gespeichert werden und die elektronische Vorrichtung ausgelegt ist für Benutzereingabe zum Navigieren durch das Menü (45) durch Antippen des oberen Teils der Vorrichtung zum Hochrollen, Antippen des unteren Teils der Vorrichtung zum Herunterrollen und Antippen eines beliebigen anderen Teils der Vorrichtung zum Auswählen einer Option des Menüs und
wobei, wenn sich die Vorrichtung (1) in dem zweiten eingeschränkten Betriebsmodus (23) befindet, die elektronische Vorrichtung ausgelegt ist zum Ermöglichen von Benutzerzugang zu Notfall-Kommunikationsfunktionen und die elektronische Vorrichtung dafür ausgelegt ist, Folgendes anzuzeigen:
eine Angabe des in der Batterie verbleibenden Stroms;
eine Angabe der Stärke des Mobilfunknetzsignals;
einen Indikator (41) für die Anzahl verpasster Anrufe, die die Vorrichtung (1) empfangen hat; und
einen Indikator (43) für die Anzahl empfangener, aber ungelesener Nachrichten, die die Vorrichtung (1) empfangen hat.

7. Verfahren nach Anspruch 6, wobei, wenn sich die Vorrichtung (1) in dem dritten eingeschränkten Betriebsmodus befindet, die Steuerung (3) als Reaktion auf Betätigung des zweiten Benutzereingabemittels (15) betreibbar ist zum Steuern der Anzeige (11), um weitere Informationen zu präsentieren, die in dem zweiten eingeschränkten Betriebsmodus nicht präsentierbar sind.

8. Verfahren nach einem der Ansprüche 6 bis 7, wobei, wenn sich die Vorrichtung (1) in dem dritten eingeschränkten Betriebsmodus befindet, die Steuerung (3) nicht betreibbar ist zum Editieren, Löschen oder Weiterleiten der angezeigten Informationen als Reaktion auf eine Benutzereingabe.

9. Computerprogramm, das Programmanweisungen zum Steuern einer elektronischen Vorrichtung umfasst, wobei die elektronische Vorrichtung (1) eine Anzeige (11), ein erstes Benutzereingabemittel (13) zum Ermöglichen von Zugang zu mehreren Funktionen, ein zweites Benutzereingabemittel (15) mit einem Detektor zum Detektieren von Gesteneingaben und eine Steuerung (3) aufweist, das, wenn es in einen Prozessor geladen wird, Folgendes bereitstellt:
Mittel zum Detektieren einer Benutzereingabe, wenn sich die Vorrichtung (1) in einem ersten aktiven Betriebsmodus befindet, in dem die Steuerung (3) betreibbar ist zum Ermöglichen eines Benutzerzugangs zu den mehreren Funktionen;
Mittel zum Wechseln des Betriebsmodus der Vorrichtung als Reaktion auf die Detektion der Benutzereingabe von dem ersten aktiven Betriebsmodus zu einem zweiten eingeschränkten Betriebsmodus, in dem die Steuerung (3) betreibbar ist zum Sperren von Benutzerzugang zu den mehreren Funktionen;
Mittel zum Detektieren einer Gesten-Benutzereingabe über das zweite Benutzereingabemittel, wobei die Gesteneingabe ein Antippen ist, das auf einen beliebigen Teil der Vorrichtung (1) angewandt wird, wenn sich die Vorrichtung in dem zweiten eingeschränkten Betriebsmodus befindet; und
Mittel zum Wechseln, als Reaktion auf die Gesten-Benutzereingabe, des Betriebsmodus der Vorrichtung von dem zweiten eingeschränkten Betriebsmodus zu einem dritten eingeschränkten Betriebsmodus, indem die Steuerung (3) betreibbar ist zum Sperren von Benutzerzugang zu den mehreren Funktionen und betreibbar ist zum Steuern der Anzeige, um in dem zweiten eingeschränkten Betriebsmodus nicht präsentierbare Informationen zu präsentieren, wobei, wenn sich die Vorrichtung (1) in dem dritten Betriebsmodus befindet, das erste Benutzereingabemittel (13) nicht auf Benutzerbetätigung zum Bereitstellen von Zugang zu den mehreren Funktionen reagiert,
wobei Betrachten von Informationen in dem dritten eingeschränkten Betriebsmodus einen Status der betrachteten Informationen nicht ändert und
wenn sich die Vorrichtung (1) in dem dritten eingeschränkten Betriebsmodus befindet, die Steuerung (3) nicht betreibbar ist zum Editieren, Löschen oder Weiterleiten der angezeigten Informationen als Reaktion auf eine Benutzereingabe,
wobei die dem Benutzer in dem dritten eingeschränkten Betriebsmodus präsentierten Informationen in einem Menü gespeichert werden und die elektronische Vorrichtung ausgelegt ist für Benutzereingabe zum Navigieren durch das Menü (45) durch Antippen des oberen Teils der Vorrichtung zum Hochrollen, Antippen des unteren Teils der Vorrichtung zum Herunterrollen und Antippen eines beliebigen anderen Teils der Vorrichtung zum Auswählen einer Option des Menüs und
wobei, wenn sich die Vorrichtung (1) in dem zweiten eingeschränkten Betriebsmodus (23) befindet, die elektronische Vorrichtung ausgelegt ist zum Ermöglichen von Benutzerzugang zu Notfall-Kommunikationsfunktionen und die elektronische Vorrichtung dafür ausgelegt ist, Folgendes anzuzeigen:
eine Angabe des in der Batterie verbleibenden Stroms;
eine Angabe der Stärke des Mobilfunknetzsignals;
einen Indikator (41) für die Anzahl verpasster Anrufe, die die Vorrichtung (1) empfangen hat; und
einen Indikator (43) für die Anzahl empfangener, aber ungelesener Nachrichten, die die Vorrichtung (1) empfangen hat.

10. Physische Entität, die das Computerprogramm nach Anspruch 9 realisiert.

11. Elektromagnetisches Trägersignal, das das Computerprogramm nach Anspruch 9 trägt.

## Revendications

1. Dispositif électronique (1) comprenant :
un dispositif d'affichage (11) ;
un premier moyen d'entrée d'utilisateur (13) pour permettre un accès à une pluralité de fonctions ;
un second moyen d'entrée d'utilisateur (15) comprenant un détecteur pour détecter des entrées de geste ; et
un dispositif de commande (3) ayant pour fonction, à la suite d'une entrée, de faire passer un mode de fonctionnement du dispositif d'un premier mode de fonctionnement actif, dans lequel le dispositif de commande (3) a pour fonction de permettre à un utilisateur l'accès à la pluralité de fonctions, à un deuxième mode de fonctionnement restreint dans lequel le dispositif de commande (3) a pour fonction de refuser à un utilisateur l'accès à la pluralité de fonctions, et
pour fonction, à la suite d'une entrée de geste par le biais du second moyen d'entrée d'utilisateur (15), dans lequel l'entrée de geste est un tapotement appliqué à une partie quelconque du dispositif (1), de faire passer le mode de fonctionnement du dispositif (1) du deuxième mode de fonctionnement restreint à un troisième mode de fonctionnement restreint dans lequel le dispositif de commande (3) a pour fonction de refuser à un utilisateur l'accès à la pluralité de fonctions et a pour fonction de présenter des informations qui ne peuvent pas être présentées dans le deuxième mode de fonctionnement restreint dans lequel, lorsque le dispositif (1) est dans le troisième mode de fonctionnement, le premier moyen d'entrée d'utilisateur (13) n'est pas sensible à un actionnement de l'utilisateur pour fournir un accès à la pluralité de fonctions,
dans lequel la visualisation d'informations dans le troisième mode de fonctionnement restreint ne modifie pas l'état des informations vues, et
lorsque le dispositif (1) est dans le troisième mode de fonctionnement restreint, le dispositif de commande (3) n'a pas pour fonction d'éditer, de supprimer ou de transmettre les informations affichées, à la suite d'une entrée d'utilisateur,
dans lequel les informations présentées à l'utilisateur dans le troisième mode de fonctionnement restreint sont stockées dans un menu et le dispositif électronique est configuré pour permettre à une entrée d'utilisateur de naviguer à travers le menu (45) en tapotant la partie supérieure du dispositif pour réaliser un défilement vers le haut, en tapotant la partie inférieure du dispositif pour réaliser un défilement vers le bas et en tapotant n'importe quelle autre partie du dispositif pour sélectionner une option du menu, et
dans lequel, lorsque le dispositif (1) est dans le deuxième mode de fonctionnement restreint (23), le dispositif électronique est configuré pour permettre à un utilisateur l'accès à des fonctions de communications d'urgence et le dispositif électronique est configuré pour afficher :
une indication de l'énergie restante dans la batterie ;
une indication de la puissance du signal du réseau cellulaire ;
un indicateur (41) du nombre d'appels manqués que le dispositif (1) a reçus ; et
un indicateur (43) du nombre de messages reçus mais non lus que le dispositif (1) a reçus.

2. Dispositif électronique (1) selon la revendication 1, dans lequel, lorsque le dispositif (1) est dans le troisième mode de fonctionnement restreint, le dispositif de commande (3) a pour fonction, à la suite de l'actionnement du second moyen d'entrée d'utilisateur (15), de commander le dispositif d'affichage (11) pour présenter d'autres informations qui ne peuvent pas être présentées dans le deuxième mode de fonctionnement restreint.

3. Dispositif électronique (1) selon l'une quelconque des revendications précédentes, dans lequel, lorsque le dispositif (1) est dans l'un ou l'autre des modes de fonctionnement restreints, le dispositif de commande (3) est configuré pour refuser l'accès à toutes les fonctions de communications à l'exception des fonctions de communications d'urgence.

4. Dispositif électronique (1) selon l'une quelconque des revendications précédentes, dans lequel le premier moyen d'entrée d'utilisateur (13) est un pavé numérique ou une région à commande tactile du dispositif d'affichage (11) .

5. Dispositif électronique (1) selon l'une quelconque des revendications précédentes, dans lequel le dispositif électronique (1) est un téléphone cellulaire mobile ou un assistant numérique personnel.

6. Procédé de commande d'un dispositif électronique (1) comprenant un dispositif d'affichage (11), un premier moyen d'entrée d'utilisateur (13) pour permettre un accès à une pluralité de fonctions, un second moyen d'entrée d'utilisateur (15) comprenant un détecteur pour détecter des entrées de geste, et un dispositif de commande (3), le procédé comprenant :
la détection d'une entrée d'utilisateur lorsque le dispositif (1) est dans un premier mode de fonctionnement actif dans lequel le dispositif de commande (3) a pour fonction de permettre à un utilisateur l'accès à la pluralité de fonctions ;
à la suite de la détection de l'entrée d'utilisateur le fait de faire passer le mode de fonctionnement du premier mode de fonctionnement actif à un deuxième mode de fonctionnement restreint dans lequel le dispositif de commande (3) a pour fonction de refuser à un utilisateur l'accès à la pluralité de fonctions ;
la détection d'une entrée de geste d'utilisateur par le biais du second moyen d'entrée d'utilisateur (15), dans lequel l'entrée de geste est un tapotement appliqué à une partie quelconque du dispositif (1) lorsque le dispositif est dans le deuxième mode de fonctionnement restreint ; et à la suite de l'entrée de geste d'utilisateur, le fait de faire passer le mode de fonctionnement du dispositif (1) du deuxième mode de fonctionnement restreint à un troisième mode de fonctionnement restreint dans lequel le dispositif de commande (3) a pour fonction de refuser à un utilisateur l'accès à la pluralité de fonctions et a pour fonction de commander le dispositif d'affichage (11) pour présenter des informations qui ne peuvent pas être présentées dans le deuxième mode de fonctionnement restreint dans lequel, lorsque le dispositif (1) est dans le troisième mode de fonctionnement, le premier moyen d'entrée d'utilisateur (13) n'est pas sensible à un actionnement de l'utilisateur pour fournir un accès à la pluralité de fonctions,
dans lequel la visualisation d'informations dans le troisième mode de fonctionnement restreint ne modifie pas l'état des informations vues, et
lorsque le dispositif (1) est dans le troisième mode de fonctionnement restreint, le dispositif de commande (3) n'a pas pour fonction d'éditer, de supprimer ou de transmettre les informations affichées, à la suite d'une entrée d'utilisateur,
dans lequel les informations présentées à l'utilisateur dans le troisième mode de fonctionnement restreint sont stockées dans un menu et le dispositif électronique est configuré pour permettre à une entrée d'utilisateur de naviguer à travers le menu (45) en tapotant la partie supérieure du dispositif pour réaliser un défilement vers le haut, en tapotant la partie inférieure du dispositif pour réaliser un défilement vers le bas et en tapotant n'importe quelle autre partie du dispositif pour sélectionner une option du menu, et
dans lequel, lorsque le dispositif (1) est dans le deuxième mode de fonctionnement restreint (23), le dispositif électronique est configuré pour permettre à un utilisateur l'accès à des fonctions de communications d'urgence et le dispositif électronique est configuré pour afficher :
une indication de l'énergie restante dans la batterie ;
une indication de la puissance du signal du réseau cellulaire ;
un indicateur (41) du nombre d'appels manqués que le dispositif (1) a reçus ; et
un indicateur (43) du nombre de messages reçus mais non lus que le dispositif (1) a reçus.

7. Procédé selon la revendication 6, dans lequel, lorsque le dispositif (1) est dans le troisième mode de fonctionnement restreint, le dispositif de commande (3) a pour fonction, à la suite de l'actionnement du second moyen d'entrée d'utilisateur (15), de commander le dispositif d'affichage (11) pour présenter d'autres informations qui ne peuvent pas être présentées dans le deuxième mode de fonctionnement restreint.

8. Procédé selon l'une quelconque des revendications 6 et 7, dans lequel, lorsque le dispositif (1) est dans le troisième mode de fonctionnement restreint, le dispositif de commande (3) n'a pas pour fonction d'éditer, de supprimer ou de transmettre les informations affichées, à la suite d'une entrée d'utilisateur.

9. Programme d'ordinateur comprenant des instructions de programme pour commander un dispositif électronique, le dispositif électronique (1) ayant un dispositif d'affichage (11), un premier moyen d'entrée d'utilisateur (13) pour permettre un accès à une pluralité de fonctions, un second moyen d'entrée d'utilisateur (15) comprenant un détecteur pour détecter des entrées de geste, et un dispositif de commande (3) qui, lorsqu'il est chargé dans un processeur, fournit :
un moyen pour détecter une entrée d'utilisateur lorsque le dispositif (1) est dans un premier mode de fonctionnement actif dans lequel le dispositif de commande (3) a pour fonction de permettre à un utilisateur l'accès à la pluralité de fonctions ;
un moyen pour faire passer le mode de fonctionnement du dispositif, à la suite de la détection de l'entrée d'utilisateur, du premier mode de fonctionnement actif à un deuxième mode de fonctionnement restreint dans lequel le dispositif de commande (3) a pour fonction de refuser à un utilisateur l'accès à la pluralité de fonctions ;
un moyen pour détecter une entrée de geste d'utilisateur par le biais du second moyen d'entrée d'utilisateur, dans lequel l'entrée de geste est un tapotement appliqué à une partie quelconque du dispositif (1) lorsque le dispositif est dans le deuxième mode de fonctionnement restreint ; et
un moyen pour passer faire le mode de fonctionnement du dispositif, à la suite de l'entrée de geste d'utilisateur, du deuxième mode de fonctionnement restreint à un troisième mode de fonctionnement restreint dans lequel le dispositif de commande (3) a pour fonction de refuser à un utilisateur l'accès à la pluralité de fonctions et a pour fonction de commander le dispositif d'affichage pour présenter des informations qui ne peuvent pas être présentées dans le deuxième mode de fonctionnement restreint dans lequel, lorsque le dispositif (1) est dans le troisième mode de fonctionnement, le premier moyen d'entrée d'utilisateur (13) n'est pas sensible à un actionnement de l'utilisateur pour fournir un accès à la pluralité de fonctions,
dans lequel la visualisation d'informations dans le troisième mode de fonctionnement restreint ne modifie pas l'état des informations vues, et
lorsque le dispositif (1) est dans le troisième mode de fonctionnement restreint, le dispositif de commande (3) n'a pas pour fonction d'éditer, de supprimer ou de transmettre les informations affichées, à la suite d'une entrée d'utilisateur,
dans lequel les informations présentées à l'utilisateur dans le troisième mode de fonctionnement restreint sont stockées dans un menu et le dispositif électronique est configuré pour permettre à une entrée d'utilisateur de naviguer à travers le menu (45) en tapotant la partie supérieure du dispositif pour réaliser un défilement vers le haut, en tapotant la partie inférieure du dispositif pour réaliser un défilement vers le bas et en tapotant n'importe quelle autre partie du dispositif pour sélectionner une option du menu, et
dans lequel, lorsque le dispositif (1) est dans le deuxième mode de fonctionnement restreint (23), le dispositif électronique est configuré pour permettre à un utilisateur l'accès à des fonctions de communications d'urgence et le dispositif électronique est configuré pour afficher :
une indication de l'énergie restante dans la batterie ;
une indication de la puissance du signal du réseau cellulaire ;
un indicateur (41) du nombre d'appels manqués que le dispositif (1) a reçus ; et
un indicateur (43) du nombre de messages reçus mais non lus que le dispositif (1) a reçus.

10. Entité physique intégrant le programme d'ordinateur selon la revendication 9.

11. Signal porteur électromagnétique comportant le programme d'ordinateur selon la revendication 9.
